(19) Europäisches Patentamt
European Patent Office
Office européen des brevets

(11) **EP 1 916 585 B1**

(12) **EUROPÄISCHE PATENTSCHRIFT**

(45) Veröffentlichungstag und Bekanntmachung des Hinweises auf die Patenterteilung:
**09.10.2013 Patentblatt 2013/41**

(51) Int Cl.:
*G05D 23/24* (2006.01)   *G01K 15/00* (2006.01)
*G01K 7/16* (2006.01)   *G01D 3/02* (2006.01)

(21) Anmeldenummer: **07016791.1**

(22) Anmeldetag: **28.08.2007**

(54) **Verfahren und Vorrichtung zur Erzeugung temperaturabhängiger Kennlinien sowie deren Linearisierung**

Method and device for creating temperature characteristic curves and for their linearisation

Procédé et dispositif destinés à la production des caractéristiques de température et à leur linéarisation

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **28.10.2006 DE 102006050924**

(43) Veröffentlichungstag der Anmeldung:
**30.04.2008 Patentblatt 2008/18**

(73) Patentinhaber: **Techem Energy Services GmbH**
**65760 Eschborn (DE)**

(72) Erfinder:
• **Kähler, Arne, Dr.**
**12683 Berlin (DE)**
• **Klee, Helmut**
**61118 Bad Vilbel (DE)**

(74) Vertreter: **KEIL & SCHAAFHAUSEN**
**Patentanwälte**
**Cronstettenstraße 66**
**60322 Frankfurt am Main (DE)**

(56) Entgegenhaltungen:
EP-A1- 1 645 928   WO-A1-02/46851
DE-A1- 3 742 334   DE-A1- 4 410 705

**Beschreibung**

Die Erfindung betrifft ein Verfahren und eine Vorrichtung zur Erzeugung temperaturabhängiger Kennlinien für Prozessgrößen als Funktion eines temperaturabhängigen Messwertes, bei dem aus Messwertpaaren der Prozessgröße und des temperaturabhängigen Messwerts eine Zuordnungstabelle mit Stützstellenpaaren gebildet wird, aus welcher mittels Inter- oder Extrapolation eine Zielgröße ermittelt wird. Ferner betrifft die Erfindung eine Möglichkeit zur Linearisierung derartiger Kennlinien.

Eine typische Anwendung für die vorliegende Erfindung ist das Erzeugen von Kennlinien auf der Grundlage von temperaturabhängigen Messwerten, welche insbesondere auf den elektrischen Widerstand eines Temperaturfühlers bezogen sind. Der temperaturabhängige Messwert stellt im Regelfall also einen gemessenen elektrischen Widerstandswert dar.

Die Prozessgrößen, deren Kennlinie als Funktion dieses temperaturabhängigen Messwertes erzeugt werden sollen, können insbesondere physikalische Messgrößen sein, wie etwa die Temperatur selbst, eine Länge oder ein Volumen bzw. deren Wärmeausdehnung, ein Druck, ein Strom oder eine Spannung, deren Wert sich aufgrund physikalischer Gegebenheiten in Abhängigkeit von der Temperatur ändert. Neben diesen unmittelbaren physikalischen Messgrößen soll der Begriff Prozessgröße aber auch solche Kennwerte oder Berechnungsgrößen von mathematisch-physikalischen Prozessmodellen oder Regelungsverfahren umfassen, wie etwa Zustandsgrößen der Gebäude- und Versorgungstechnik, beispielsweise Enthalpie, Wärmeleistung, Wärmebedarf, Versorgungszustand, Korrekturgrößen zur Optimierung der Wärmeleistung oder dergleichen.

In technischen Anlagen oder Systemen wird die Temperatur häufig mit Temperaturfühlern erfasst, deren Widerstandswert über Kennlinien mit einer Temperatur korreliert ist. Die Kennlinien dieser gängigen Temperaturfühler stellen die Abhängigkeit des Messwiderstands über der gemessenen Temperatur dar und können häufig durch Polynome höherer Ordnung (beispielsweise Platin-Temperaturfühler oder Nickel-Temperaturfühler) oder exponentielle Kennlinien (Heißleiter NTC bzw. Kaltleiter PTC) beschrieben werden.

Auf Basis dieser bekannten Kennlinien eines bekannten Temperaturfühlers lässt sich aus dem gemessenen Widerstand im Rahmen der erreichbaren Genauigkeit der gewünschte Temperaturwert ermitteln. Die Temperaturkennlinien unterschiedlicher Temperaturfühler sind jedoch völlig verschieden. Bei einigen Temperaturfühlertypen hängen die Kennlinien auch noch stark von der Materialkonstante ab, so dass die Kennlinien an das jeweils verwendete Material angepasst werden müssen. Diese Materialkonstanten müssen häufig nach der Produktion ermittelt werden. Werden, was in der Praxis häufig vorkommt, die Temperaturen von Temperaturfühlern mit unterschiedlichen Kennlinien in einem Verfahren weiterbearbeitet, hat dies den Nachteil, dass alle Kennlinien oder zumindest ein oder mehrere Punkte dieser Kennlinien bekannt sein müssen. Die Verwendung unterschiedlicher Temperaturfühler erfordert daher die Kenntnis der Kennlinien der eingesetzten Temperaturfühler, also die Identifikation des Fühlers und seiner Kennlinie.

Dieses Problem kann sich bei Heizungsanlagen stellen, wenn unterschiedliche Regelungs- und Erfassungssysteme über eine Temperaturschnittstelle zusammengeschaltet werden. Dies kommt bei der Nachrüstung und Modernisierung älterer Anlagen regelmäßig vor, beispielsweise wenn diese mit einer adaptiven Wärmeleistungsregelung ausgestattet werden, welche die üblicherweise außentemperaturabhängig geführte Vorlauftemperatur der Heizungsanlage in Abhängigkeit von dem tatsächlichen Wärmebedarf in einem Heizkreis oder Gebäude anpasst. Bei der Installation eines solchen Systems ist die Identifikation von grundsätzlich erstmal unbekannten Temperaturfühlern und deren Kennlinie mit einem sehr hohen personellen Aufwand verbunden. Außerdem benötigen die kennlinienbasierten Verfahren zum Teil erheblichen Speicheraufwand für die Speicherung aller bekannten Temperaturkennlinien, so dass sich die Komponenten aufgrund der benötigten Speicherkapazität verteuern.

Die WO 02/46851 A1 offenbart ein Verfahren zur Prozessüberwachung, bei dem eine Vorhersage zur Ausfallwahrscheinlichkeit eines elektronischen Geräts oder einzelner elektronischer Bauteile erreicht werden soll. Dazu wird die thermische Belastung als Temperatur am Bauteil direkt oder indirekt ermittelt und in einer Recheneinheit die Veränderungsdynamik der Temperatur erfasst, um daraus mittels einer Trendanalyse eine Aussage zur gegenwärtigen und zukünftigen Funktionalität des elektronischen Geräts zu treffen. Zur direkten Bestimmung der Temperatur werden Temperatursensoren verwendet. Im Fall eines Elektromagneten als zu überwachendem Gerät werden in einer indirekten Temperaturbestimmung temperaturabhängige Widerstandswerte ermittelt und gespeichert werden. In der Speichereinheit sind dazu Kennlinien abgelegt, die den Widerstand des Elektromagneten in Beziehung zu der Temperatur setzen. Bei diesen Kennlinien handelt es sich um zuvor empirische ermittelte Kennlinien.

Aus der DE 44 10 705 A1 ist ein Verfahren zur Ausschaltung von Messfehlern eines Sensors infolge von Temperaturstöreinflüssen bekannt. Dazu kann wird jedem Bestandteil der Messstrecke eine Temperatur-Kennlinie zugeordnet, wobei bei der Berechnung des Übertragungsverhaltens des Gesamtsystems somit alle Temperatur-Kennlinien berücksichtigt werden müssen. Dies ist trotz an sich bekannter Kennlinien aufwendig. Daher wird vor vorgeschlagen, durch eine Thermostabilisierung die einzelnen System-Komponenten auf einem gemeinsamen Temperaturniveau zu halten, so dass alle Komponenten bis auf den Sensor auf dieses einheitliche Temperaturniveau gebracht werden und nur dieses einheitliche Temperaturniveau bei der Übertragungsfunktion zur Abschätzung des Fehlers berücksichtigt werden muss. Dies wird durch eine geschickte konstruktive Anordnung der Bauelemente erreicht. Die Kennlinien selbst werden jedoch werksseitig exakt ermittelt und in Kennfeldspeichern abgelegt. Aus dem Kennfeldspeicher wird dann unter Zuhilfenahme von Interpolationen der wahre Temperaturwert ermittelt, indem der temperaturabhängige Fehler kompensiert wird.

Die DE 37 42 335 A1 beschreibt eine Schaltungsanordnung zur Linearisierung und Normierung eines Kennlinienfeldes eines Messwertaufnehmers. Ziel des vorgeschlagenen Verfahrens ist es, die bekannten Kennlinien eines näherungsweise durch eine Exponentialfunktion darstellbaren, nicht linearen Kennlinienfeldes eines Sensors in Abhängigkeit von der zu messenden Größe und einem Parameter so zu linearisieren und normieren, dass für mehrere unterschiedliche Werte des Parameters ein und derselbe lineare Zusammenhang zwischen dem linearisierten und normierten Messsignal und der zu messenden Größe bestimmt. Hierdurch soll in Geräten zur Messung der Betondeckung von Stahlbewährungen in Stahlbeton- und Spannbetonbauteilen eine vereinfachte Messung durchgeführt werden können. Dazu werden die Eingangsmesssignale in einem Hardware-Logarithmierer unmittelbar einer Linearisierung unterzogen, wobei die Normierung durch einen geeignet gewählten Eingangsspannungsteiler erfolgt, der die Eingangsspannung des Logarithmierers für den Maximalwert der gleichzurichtenden Wechselspannung festlegt.

Aufgabe der vorliegenden Erfindung ist es daher, auf einfache Weise temperaturabhängige Kennlinien für Prozessgrößen zu erzeugen, welche insbesondere keine Kenntnis der Kennlinien der verwendeten Temperaturfühler voraussetzt.

Diese Aufgabe wird erfindungsgemäß mit den Merkmalen der Ansprüche 1 und 9 gelöst. Dabei ist insbesondere vorgesehen, dass Messwertpaare jeweils gebildet aus einem temperaturabhängigen Messwert und der zugehörigen Prozessgröße, deren temperaturabhängige Kennlinie erzeugt werden soll, während einer Trainingsphase abgespeichert werden, ein temperaturabhängiger Messwert als Startwert festgelegt wird und alle temperaturabhängigen Messwerte mit diesem Startwert normiert werden und die normierten, temperaturabhängigen Messwerte linearisiert und als linearisierte Messwerte der jeweiligen gemessenen Prozessgrößen zugeordnet werden. Aus einem oder mehreren solcher Messwertpaar(e) wird ein Stützstellenpaar erzeugt. Auf diese Weise ist es möglich, im laufenden Betrieb aus realen temperaturabhängigen Messwerten, insbesondere den Widerstandswerten der eingesetzten Temperaturfühler, und den zugehörigen Prozessgrößen, welche einfache physikalische Messgrößen oder insbesondere daraus abgeleitete Prozessparameter sein können, Messwertreihen aufzunehmen. Diese Messwertreihen erlauben dann für Temperaturfühler mit verschiedenen, beliebig gekrümmten, insbesondere stetigen und monotonen, Kennlinien eine Abbildung der Prozessgröße auf die zur Temperatur proportionalen Messgröße des Widerstandswerts bzw. Temperaturfühlers zu finden und diese Abbildung als Kennlinie im Sinne eines Stützstellenpaars abzuspeichern.

Dabei macht sich die vorliegende Erfindung zu nutze, dass es nicht unbedingt notwendig ist, im Rahmen eines Prozesses den dem Widerstandswert eines Temperaturfühlers entsprechenden Temperaturwert genau zu kennen, sofern eine Abbildung zwischen dem dem Temperaturwert proportionalen Widerstandswert und dem Prozesswert erzeugt werden kann. Durch die erfindungsgemäß vorgenommene Linearisierung wird dabei die Anzahl der benötigten Stützstellen erheblich verringert. Bei nicht linearen Temperaturkennlinien ist es nämlich notwendig, in bestimmten Bereichen mit großen temperaturabhängigen Änderungen im nicht-linearen Bereich des abzubildenden Zusammenhangs zwischen dem Messwert und der Prozessgröße eine große Anzahl von Stützstellen vorzusehen. Dies führt zu einer großen Häufung der Stützstellen zumindest im Bereich hoher Nicht-Linearität. Sofern der Verlauf der Kennlinien von vornherein nicht bekannt ist, muss diese hohe Anzahl der Stützstellen sogar über den gesamten interessierenden Wertebereich der Messwerte erzeugt werden und kann gegebenenfalls nach Festlegung aller Stützstellen ausgedünnt werden. Dies ist jedoch wesentlich aufwändiger als eine geeignete Linearisierung der gewünschten Kennlinien, welche mit wenigen Stützstellen eine einfache Inter- bzw. Extrapolation zulässt.

Das erfindungsgemäß vorgeschlagene Verfahren zur Erzeugung temperaturabhängiger Kennlinien lässt sich besonders bevorzugt bei Anwendungen bzw. Verfahren verwenden, bei denen es nicht erforderlich ist, einen expliziten Temperaturwert eines Temperaturfühlers zu kennen. Zur Umgehung des Aufwands für die Bestimmung der Temperatur bzw. des Aufwands für die Identifikation des Temperaturfühlers und seiner Kennlinie wird vorteilhafter Weise vorgeschlagen, die Prozessgröße, deren Temperaturabhängigkeit benötigt wird, nicht unmittelbar mit einem Temperaturwert in Zusammenhang zu bringen, sondern den Zusammenhang zwischen der Prozessgröße und einer der temperaturproportionalen Größe, insbesondere dem Widerstandswert eines Temperaturfühlers, zu finden und weiterzuverarbeiten. So können beispielsweise alle bekannten außentemperaturabhängigen Prozessgrößen der Gebäudeversorgungstechnik nicht in Abhängigkeit der Außentemperatur, sondern in Abhängigkeit des Widerstandwerts des Außentemperaturfühlers dargestellt werden. Die gleiche Vorgehensweise ist auch in Verbindung mit den in der Versorgungstechnik wichtigen Vorlauf- und Rücklauftemperaturen von Heizungs-, Kühl- und Klimaanlagen einsetzbar. Beispiele für solche Prozessgrößen der Gebäudeversorgungstechnik sind die Heizungsfahrkurve, d.h. der Außentemperatur geführte Sollwert der Vorlauftemperatur, ein Gebäudeversorgungszustand, ein Gebäudewärmebedarf, eine Vorlauf- oder Massenstromkorrektur einer adaptiven Wärmebedarfsregelung, Heizkörper-Betriebsleistungsverhältnisse, Heizkörper-Normleistungsverhältnisse, Gebäude-Lüftungskennzahlen, die das Lüftungsverhalten der Nutzer abbilden, und dergleichen.

Um temporäre lokale Einflüsse bei der Ermittlung der Kennlinie abzuschwächen, ist es vorteilhaft, ein Messwertpaar zeitlich geglättet abzuspeichern, wobei sowohl der temperaturabhängige Messwert als auch die Prozessgröße zeitlich geglättet werden können. Die zeitliche Glättung kann beispielsweise durch Mittelwertbildung verschiedener Messwerte und/oder der dazugehörigen Prozessgrößen über ein vorgebbares Zeitintervall erfolgen.

Um die Normierung auf den Startwert bereits ab Beginn der Trainingsphase vornehmen zu können, kann erfindungsgemäß der erste temperaturabhängige Messwert als Bezugswert für die Normierung festgelegt werden. Es ist jedoch auch möglich, den Startwert aus einer Selektion mehrerer Messwertpaare beispielsweise mittels einer Mittelwertbildung oder einer Auswahl des häufigsten Messwerts in einer Verteilung zu bestimmen und abzuspeichern. Bei diesem Vorgehen werden beispielsweise zunächst mehrere Messwertpaare gespeichert, bevor die Normierung der Messwerte auf einen Startwert erfolgt. Da bei Inbetriebnahme einer Anlage der erste Messwert sich häufig noch in einem zufälligen Wertebereich bspw. außerhalb des tatsächlichen Betriebsbereichs befindet, kann dieser Startwert einfach ausgeblendet werden. Daher kann es auch sinnvoll sein, im Einschaltbetrieb noch nicht stabilisierte Messwerte auszublenden.

Ferner ist es möglich, dass der Startwert bei nachfolgenden Messungen nachgeführt wird, insbesondere indem als Startwert derjenige Messwert gewählt wird, der aus einer Messwertreihe dem größten oder dem kleinsten Messwert entspricht oder einem ausgezeichneten Messwert am nächsten kommt. Als ausgezeichneter Messwert kann dabei ein temperaturabhängiger Messwert dienen, dem ein ausgewählter Wert der Prozessgröße entspricht. Im Falle der Temperatur als Prozessgröße kann der Wert beispielsweise der 0-Grad-Wert sein.

Ein erfindungsgemäß wichtiger Aspekt bei der Erzeugung von Kennlinien ist die Linearisierung temperaturabhängiger Messwerte. Dabei wird ein linearisierter Messwert durch eine logarithmische Normierung eines temperaturabhängigen Messwerts mit einem Startwert gebildet. Durch die Berechung des Logarithmus zu einer auszuwählenden Basis findet innerhalb der in der Regel abgedeckten Temperaturbereiche de facto eine Linearisierung der Kennlinie über den interessierenden Messbereich statt. Dazu wird vorzugsweise aus dem Quotienten des temperaturabhängigen Messwerts mit dem als Normierungswert dienenden Startwert der Logarithmus zu einer bestimmten, ausgewählten Basis gebildet.

Mittels eines Skalierungsfaktors ist es ferner möglich, den linearisierten Messwert auf einen vorgegebenen Zahlenwertebereich zu skalieren, um beispielsweise den durch die beteiligten Apparate bzw. Geräte abgedeckten Wertebereich möglichst vollständig auszuschöpfen. Hierdurch kann die Auflösung der Kennlinien für die Anwendung deutlich erhöht werden.

Um gemäß der Erfindung aus den Messwertpaaren ein Stützstellenpaar zu erzeugen, kann in einer einfachen Ausführungsform vorgesehen sein, dass jedes linearisierte Messwertpaar ein Stützstellenpaar bildet, bis eine vorgebbare Anzahl von Stützstellen erreicht ist. Um eine Aktualisierung der Stützstellenpaare zu erreichen, können anschließend beispielsweise neuere Stützstellenpaare ältere ersetzen, sofern die vorgesehene Anzahl von Stützstellenpaaren bereits existiert.

Eine größere Genauigkeit lässt sich im Verlaufe der Kennlinienbildung erreichen, wenn eine Aktualisierung der Stützstellenpaare insbesondere bei Vorliegen von mehr als der vorgesehenen Anzahl von Stützstellenpaaren derart erfolgt, dass alte Stützstellenpaare mit vorzugsweise bereits normiert linearisierten, temperaturabhängigen Messwertpaaren verschmolzen werden. Die Verschmelzung kann durch eine mathematische Funktion erreicht werden, beispielsweise eine Exponentialfunktion, welche den neuen Stützstellenwert der Prozessgröße entsprechend dem Abstand der zu verschmelzenden Werte der den Prozessgrößen zugeordneten, temperaturabhängigen Messgrößen wichtet. Dabei kann zur Verschmelzung insbesondere das bereits existierende Stützstellenpaar ausgewählt werden, dessen Stützstellenmesswert dem Messwert des neuen Messwertpaares am nächsten liegt.

Diese Verschmelzung kann auch zum Einsatz kommen, wenn die Stützstellenpaare erfindungsgemäß iterativ ermittelt werden, d.h. wenn sie während des regulären Betriebs eines die Kennlinie verwendenden Systems regelmäßig weiter erfasst und ermittelt werden. Dies hat den Vorteil, dass Alterungseffekte, bspw. eine Drift, der beteiligten Fühler kontinuierlich erfasst und bei der Bestimmung der Kennlinie berücksichtigt werden. Somit ist es erfindungsgemäß möglich, die Kennlinie während des laufenden Betriebs des Systems nachzuführen.

Die Erfindung bezieht sich ferner auf eine Vorrichtung zur Durchführung eines Verfahrens zur Erzeugung einer temperaturabhängigen Kennlinien von Prozessgrößen, insbesondere des zuvor beschriebenen Verfahrens. Diese Vorrichtung weist eine Messeinrichtung zur Erfassung eines temperaturabhängigen Messwerts und eines diesem zugeordneten Prozesswerts, ein Trainingsmodul zur Bildung einer Zuordnungstabelle mit Stützstellenpaaren und ein Berechnungsmodul zur Ermitteln einer Zielgröße mittels eines Inter- oder Extrapolationsverfahrens auf, wobei das Trainingsmodul eine Recheneinheit aufweist, welche derart eingerichtet ist, dass temperaturabhängige Messwerte normiert, die normierten, temperaturabhängigen Messwerte linearisiert und als linearisierte Messwerte der gemessenen Prozessgröße zugeordnet werden. Aus einem oder mehreren solcher Messwertpaare wird dann ein Stützstellenpaar erzeugt. Dabei können insbesondere die vorbeschriebenen Verfahrensvarianten Anwendung finden.

Um die erzeugten Kennlinien anzeigen zu können, kann erfindungsgemäß ein Visualisierungsmodul vorgesehen sein, mit dem die Zuordnungstabelle mit Stützstellenpaaren insbesondere graphisch darstellbar ist. Das Visualisierungsmodul kann beispielsweise an ein Trainingsmodul angeschlossen sein und - wie die gesamte Vorrichtung - in einen Computer bzw. eine Computereinrichtung, insbesondere einen Mikroprozessor, integriert sein.

Ferner ist es vorteilhaft, wenn die Vorrichtung ein geeignetes Ausgabemodul aufweist, welches eine Schnittstelle zur Übergabe der Prozessgröße an nachfolgende Systeme aufweist.

Damit ermöglicht die vorliegende Erfindung eine iterative Generierung von temperaturabhängigen Kennlinien beliebiger Mess- oder Prozessgrößen ohne Kenntnis der Kennlinie des zugehörigen Temperaturfühlers. Sie ist daher für die Erzeugung von Kennlinien anwendbar, welche auf den elektrischen Widerstand eines Temperaturfühlers bezogen werden. Diese automatisch erzeugten Kennlinien können während der Anwendung auch beständig nachgeführt werden, so dass einem geänderten Nutzerverhalten oder Veränderungen der temperaturabhängigen Messwerte beispielsweise nach Austausch eines insbesondere typgleichen Temperaturfühlers oder einer bspw. altersbedingten Drift elektronischer Bauteile in einem Temperaturfühler Rechnung getragen werden kann. Eine systematische Drift kann so auf einfache Weise automatisch ohne Eingriff von au-ßen nachgeführt werden.

Eine besonders vorteilhafte Anwendung des erfindungsgemäßen Verfahrens bzw. der erfindungsgemäßen Vorrichtung bieten daher Geräte und Systeme zur Messung, Erfassung und Verteilung von Wärme, wie Wärmemengenzähler, Durchflussgeber, Thermometer, Thermostate, Ventile oder Heizkostenverteiler. Diese können insbesondere in Gebäudeheizungsanlagen, Gebäudekühlanlagen, Klimaanlagen und Brauchwasseranlagen mit Einrichtungen zur Messung und Regelung von Kessel-, Kühlwasser-, Vorlauf-, Rücklauftemperaturen oder Massenströmen Anwendung finden. In diesem Zusammenhang besteht eine bevorzugte Anwendungsmöglichkeit bei verfahrenstechnischen Prozessen mit Geräten und Systemen zur Messung der Medientemperatur in mit Flüssigkeiten durchströmten Rohren, beispielsweise von Heizungsanlagen. Allgemein ist die Erfindung jedoch auch anwendbar bei Geräten und Systemen zur Messung und Regelung und Überwachung des Betriebsdrucks, von Strömungen und Füllständen. Ein besonders bevorzugtes Anwendungsgebiet der vorliegenden Erfindung sind Verfahren und Vorrichtung zur bedarfsgeführten Wärmebereitstellung in Heizungsanlagen, da derartige Verfahren und Vorrichtungen häufig an bestehenden Heizungsanlagen installiert werden, bei denen die Kennlinien der eingesetzten Temperaturfühler nicht bekannt sind.

Weitere Merkmale, Vorteile und Anwendungsmöglichkeiten der vorliegenden Erfindung ergeben sich auch aus der nachfolgenden Beschreibung von Ausführungsbeispielen und der Zeichnung. Dabei bilden alle beschriebenen und/ oder bildlich dargestellten Merkmale für sich oder in beliebiger Kombination den Gegenstand der vorliegenden Erfindung, auch unabhängig von der Zusammenfassung in den Ansprüchen oder deren Rückbezügen.

Es zeigen:

Fig. 1          Widerstands-Temperatur-Kennlinien gängiger Temperaturfühler;

Fig. 2          einen Flussplan zur Durchführung des erfindungsgemäßen Verfahrens zur Erzeugung temperaturabhängiger Kennlinien;

Fig. 3          ein Flussdiagramm zur Durchführung der erfindungsgemäßen Linearisierung von Kennlinien;

Fig. 4          das Ergebnis des erfindungsgemäßen Verfahrens für die in Fig. 1 gezeigten Kennlinien in einer ersten Verfahrensvariante;

Fig. 5          das Ergebnis des erfindungsgemäßen Verfahrens für die in Fig. 1 gezeigten Kennlinien in einer zweiten Verfahrensvariante;

Fig. 6          ein Blockschaltbild einer erfindungsgemäßen Vorrichtung gemäß einer ersten Ausführungsform;

Fig. 7          ein Blockschaltbild einer erfindungsgemäßen Vorrichtung gemäß einer zweiten Ausführungsform;

Fig. 8          ein Blockschaltbild einer erfindungsgemäßen Vorrichtung gemäß einer dritten Ausführungsform;

Fig. 9          ein Blockschaltbild einer erfindungsgemäßen Vorrichtung gemäß einer vierten Ausführungsform;

Fig. 10         ein Blockschaltbild einer erfindungsgemäßen Vorrichtung gemäß einer fünften Ausführungsform und

Fig. 11a bis 11d    Kennlinien einer erfindungsgemäßen Anwendung des Verfahrens für wärmebedarfsgeführte Optimierungsverfahren.

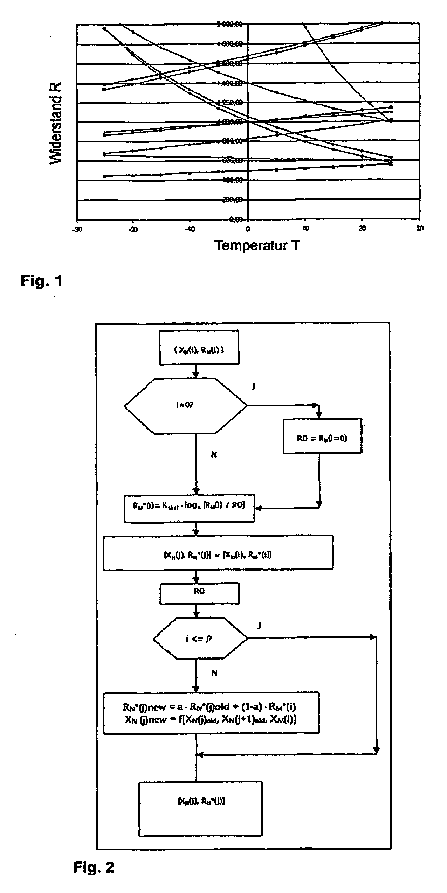

In Fig. 1 sind Kennlinien für Temperaturfühler dargestellt, die den Widerstandswert des Temperaturfühlers in Abhängigkeit von der tatsächlich herrschenden Temperatur darstellen.

Diese sind je nach Art des Temperaturfühlers deutlich verschieden. In vielen Fällen ist es jedoch möglich, den Wert einer physikalischen Größe (Prozessgrö- ße) X in Abhängigkeit der Temperatur (T) mit dem nachfolgend aufgeführten Polynom höherer Ordnung zu beschreiben:

$$X(T)=X(T0)*(1+A_1*(T-T0)+A_2*(T-T0)^2+...+A_n(T-T0)^n),$$

wobei

X          physikalische Größe
T          Temperatur
T0        Bezugstemperatur
$A_1$     Temperaturkoeffizient 1. Ordnung im Temperaturintervall dT = T- T0, angegeben in $[K^{-1}]$
$A_2$     Temperaturkoeffizient 2. Ordnung im Temperaturintervall, angegeben in $[K^{-2}]$
An        Temperaturkoeffizient n- ter Ordnung im Temperaturintervall, angegeben in $[K^{-n}]$

sind.

Die Kennlinien gängiger Temperaturfühler beschreiben die Abhängigkeit des Messwiderstandes R über der gemessenen Temperatur mit folgenden Polynom- bzw. Exponentialfunktionen:

Platin- Temperaturfühler

Die Widerstandsänderung ist nach DIN IEC 60751 festgelegt.

$$R = R(T0) \cdot (1 + a \cdot (T - T0) + b \cdot (T - T0)^2),$$

wobei
R(T0) [Ohm],
T0 = 0 °C, sofern Temperatur T in °C,
a = 3,9083 . 10-3 [Ohm/K],
b = -5,775 . 10-7 [Ohm/$K^2$].

Nickel-Temperaturfühler

$$R = R(T0) + a \cdot T + b \cdot T^2 + c\ T^4,$$

wobei
R (T0) [Ohm],
Temperatur T [°C],
a, b und c materialabhängige Konstanten; Beispiel:
a = 0.5485 [Ohm/K],
b = 0.665 * 10- 3 [Ohm/$K^2$],
c = 2.805 * 10- 9 [Ohm/$K^4$] .

Heißleiter (NTC)

Die Kennlinie eines Heißleiters entspricht:

$$R(T) = R(T0) * EXP \{b * [1 / (273K+T) - 1 / (273K + T0)]\},$$

wobei
T0 Nenntemperatur, meist 25°C,
b Materialkoeffizient (b>0)

Kaltleiter (PTC)

Die Kennlinie eines Kaltleiters entspricht:

$$R(T) = R(T0) * EXP[b * (T - T0)],$$

wobei
T0: Nenntemperatur, meist 25°C,
b Materialkoeffizient (b>0)

Beispiele für diese Kennlinien mit unterschiedlichen Quotienten sind in Fig. 1 dargestellt. Auf Basis dieser bekannten Kennlinien eines Temperaturfühlers lässt sich aus dem gemessenen Widerstandswert der Temperaturwert im Rahmen der Genauigkeit der Kennlinie und der Messung des Temperaturfühlerwiderstands bestimmen. So können beispielsweise die Kennlinien mehrerer Temperaturfühler im Speicher eines Mikrocontrollers in Form von Tabellen oder mathematischen Beziehungen abgelegt sein.

Eine einfache Linearisierung der Kennlinie kann durch Weglassen der Therme höherer Ordnung erreicht werden, beispielsweise durch ein Polynom erster Ordnung $X(T) = X(T0) * (1+A_i * (T- T0))$. Eine Linearisierung ist ebenfalls durch Bildung einer Graden zwischen zwei bekannten Punkten einer Kennlinientabelle möglich. Ferner kann eine Linearisierung durch Parallelschaltung oder Reihenschaltung eines temperaturunabhängigen Widerstands erreicht werden. Diese Verfahren sind jedoch aufwändig bzw. ungenau.

In Fig. 2 ist eine Ausführungsform des Verfahrens zur Erzeugung temperaturabhängiger Kennlinien durch Bildung einer Zuordnungstabelle mit Stützstellenpaaren der Prozessgröße X und des temperaturabhängigen Messwertes R im Detail dargestellt.

Zur Erzeugung der Kennlinie werden in einem Trainingsprozess zunächst die Prozessgröße X und der temperaturabhängige Messwert R erfasst bzw. gemessen und dienen als Messwertpaar $(X_M(i), R_M(i))$ und Ausgangspunkt für die Anwendung des Verfahrens. Dabei kann ein Messwertpaar $(X_M(i), R_M(i))$ vorverarbeitet, beispielsweise zeitlich gemittelt bzw. geglättet, sein.

Anschließend wird aus dem ersten Messwertpaar $(X_M(i=0), R_M(i=0))$ der Wert $R_m(i=0) = R(0)$ bzw. R0 als Startwert des Temperaturfühlers abgespeichert. Alternativ können auch aus den ersten Messwertpaaren $(X_M(i), R_M(i))$ die Messwerte $R_M(i=0, 1, ...)$ selektiert und der Startwert $R(0)$ beispielsweise mit Hilfe einer Mittelwertberechnung gebildet und abgespeichert werden.

Sofern der Startwert $R(0)$ bereits existiert, wird das Messwertpaar logarithmisch normiert, indem der Widerstandswert $R_M(i)$ wie folgt umgerechnet wird:

$$R_M*(i) = K_{skal} \cdot \log_n [R_M(i)/R(0)].$$

$K_{skal}$ ist ein Skalierungsfaktor, der vorzugsweise so bestimmt wird, dass das Ergebnis $R_M*(i)$ im Zahlenwertbereich des verwendeten Mikroprozessors liegt. Die logarithmische Basis wird durch Bildung des Logarithmus des Quotienten $R_M(i)/R(0)$ zur Basis n gebildet, wobei $\log_n$ beispielsweise der natürliche Logarithmus $\log_e = \ln$ sein kann. $R_M(i)$ ist der Widerstandsmesswert, dem die Temperatur $T_M(i)$ (als Beispiel für eine Prozessgröße X) nach der Kennlinie $T(R)$ zugeordnet würde.

Durch die Quotientenbildung $R_M(i)/R(0)$ wird eine Normierung auf die jeweilige Größenordnung des Widerstandswertes vorgenommen. Die eigentliche Linearisierung erfolgt dann durch die Logarithmus- Funktion. Die abgebildete Funktion $R*(i)$ ist zwar vom Wertebereich her je nach Fühlertyp verschieden, bildet aber einen linearisierten Zusammenhang zwischen $R_M*(i) = \ln(R_M(i)/R(0))$ als Widerstandsersatzwert und $T_N(i)[C°]$ als Temperaturwert einer Temperaturkennlinie bzw. zwischen $R_M(i)$ und der Prozessgröße $X_M(i)$ einer beliebigen, temperaturabhängigen Kennlinie. Diese Linearisierung führt zu einer Streckung der Verteilung der Stützstellen $R_N*(j)$ bzw. der benötigten Messwerte $R_M*(i)$.

Anschließend werden die aus der Prozessgröße $X_M(i)$ und dem normierten, temperaturabhängigen Messwert $R_M*(i)$ gebildeten, linearisierten Messwertpaare $(X_M(i), R_M*(i))$ derart sortiert, dass die normierten, temperaturabhängigen Messwerte $R*_M(i)$ eine monoton steigende oder fallende Reihe bilden.

Dann ist es besonders einfach, den Startwert R(0) dadurch nachzuführen, dass jeweils der größte bzw. kleinste temperaturabhängige Messwert R(i) den Startwert R(0) bildet. Bei dem Nachführen des Startwerts R(0) werden die bereits vorhandenen Stützstellen des linearisierten, normierten Messwertes $R^*_M(i)$ auf den nachgeführten Startwert R(0) umgerechnet. Solange die Anzahl der Messwertpaare $(X_M(i), R^*_M(i))$ die Anzahl J der Stützstellen nicht überschreitet, wird das Stützstellenpaar $(X_N(j), R^*_N(j))$ mit dem Messwertpaar $(X_M(i) R^*_M(i))$ gleichgesetzt.

Sofern die laufende Messung i die Anzahl J der Stützstellen übersteigt, können bereits vorhandene Stützstellenpaare $(X_N(j), R^*_N(j))$ durch das neue normierte und linearisierte Messwertpaar $(X_M(i), R^*_M(i))$ ersetzt werden. Dies hat jedoch den Nachteil eines Informationsverlustes.

Daher wird, wie in Fig. 2 dargestellt, eine Verschmelzung des linearisierten, normierten Messwertpaares $(X_M(i), R^*_M(i))$ und demjenigen Stützstellenpaar $(X_N(j), R^*_N(j))$ durchgeführt, welches am dichtesten bei dem Messwertpaar $(X_M(i), R_M^*(i))$ liegt, d.h. eine Verschmelzung derjenigen Wertpaare vorgenommen, für die der Betrag der Differenz $|R^*_M(i) - R^*_N(j)|$ für j = 1 bis J minimal ist.

Für die Verschmelzung des Messwerts und der Prozessgröße an der Stützstelle können beispielsweise folgende Beziehungen gelten:

$$R_N^*(j)_{new} = a \cdot R_N^*(j)_{old} + (1-a) \cdot R_M^*(i),$$

mit beispielsweise $a = g = e^{-d/D} = g(d)$, $d = |R_M^*(i) - R_N^*(i)|$, D Konstante, und

$$X_N(j)_{new} = f[X_N(j)_{old}, X_N(j+1)_{old}, X_M(i)],$$

wobei $X_N(j)_{old} <= X_M(i) <= X_N(j+1)_{old}$,
mit beispielsweise $X_N(j)_{new} = g \cdot X_N(j)_{old} + (1-g) \cdot X_M(i)$, wobei

$$g = e^{-d/D} = g(d), \quad d = |R_M^*(i) - R_N^*(j)|.$$

Anstelle der Verschmelzungsfunktion $e^{-x/D}$ können auch andere monotone und stetige Funktionen wie etwa $e^{-(x/D)^2}$ verwendet werden, die vorzugsweise die Bedingungen f(x=0) = 1, $f(|x| \neq 0) < f(x = 0)$ und $f(|x|) \geq 0$ erfüllen.

Auf diese Weise wird im Laufe der Zeit eine gleichmäßige Stützstellenverteilung über den gesamten interessierenden Messwertbereich erzeugt. Für zwischen bzw. seitlich zu den Stützstellenpaaren liegende Messwerte R werden die gesuchten Prozessgrößen X durch bekannte Extra- bzw. Interpolationsverfahren erzeugt.

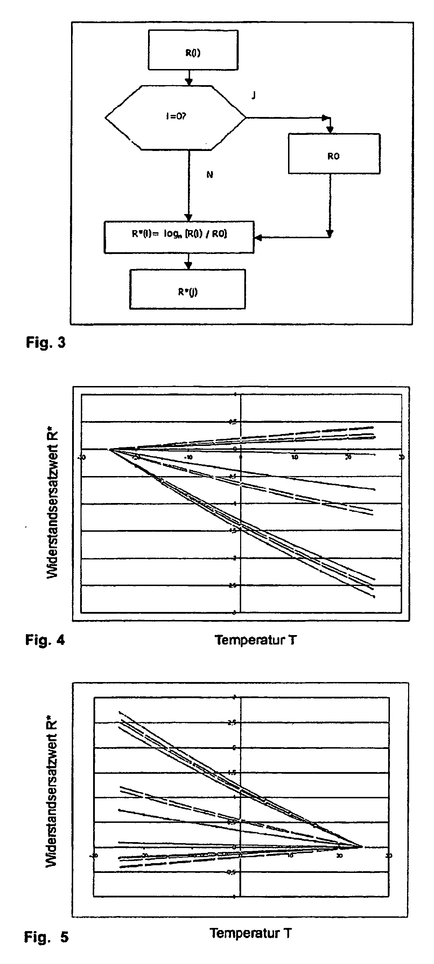

Mit dem vorbeschriebenen Verfahren bestimmte Temperaturkennlinien sind in den Fig. 4 und 5 dargestellt, wobei in Fig. 4 der Startwert R(0) bei T = - 25°C und in Fig. 5 der Startwert R(0) bei T = + 25°C liegt. Durch Anwendung der Logarithmusfunktion werden die in Fig. 1 mit unterschiedlichster Krümmung dargestellten Kennlinien im Wesentlichen linearisiert, so dass auch mit wenigen Stützstellen eine gute Extra- bzw. Interpolation möglich ist.

In Fig. 3 ist der auf die Linearisierung der temperaturabhängigen Messwerte R gerichtete Verfahrensabschnitt, welcher einen eigenständigen Erfindungsteil darstellt, noch einmal im Detail dargestellt, wobei in diesem Fall auf die Skalierung $K_{skal}$ verzichtet wurde. Diese ist jedoch auch bei der Linearisierung gemäß Fig. 3 grundsätzlich anwendbar.

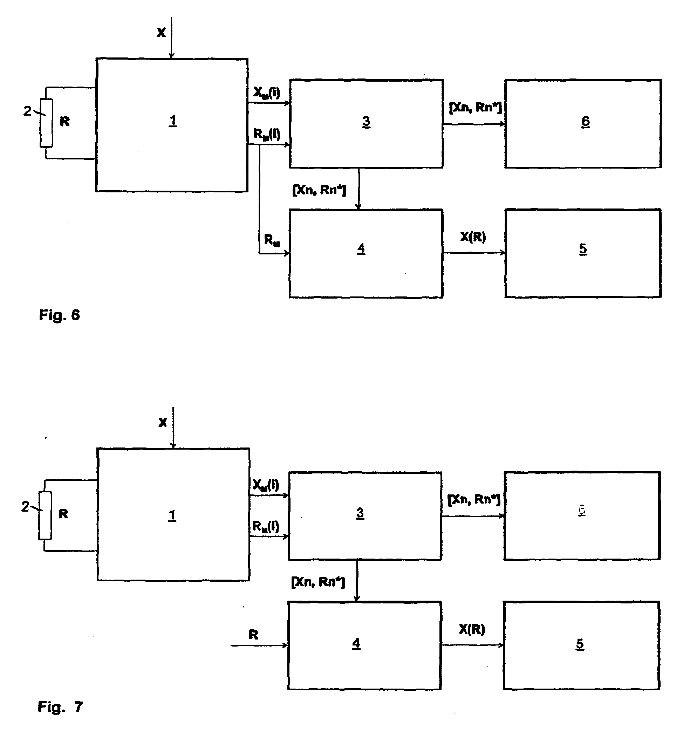

In den Fig. 6 bis 9 sind Blockdiagramme erfindungsgemäßer Vorrichtungen zur Durchführung des vorbeschriebenen Verfahrens dargestellt, die nachfolgend erläutert werden.

Die in Fig. 6 dargestellte Vorrichtung weist eine Messeinrichtung 1 auf, an welche ein Temperaturfühler 2 mit einer unbekannten Kennlinie angeschlossen ist. In der Messeinrichtung 1 wird als temperaturabhängiger Messwert der Widerstandswert R des Temperaturfühlers 2 gemessen. Ferner verfügt die Messeinrichtung 1 über einen Anschluss zur Eingabe einer temperaturabhängigen Mess- oder Prozessgröße X, deren Kennlinie in Abhängigkeit von den Messwerten R des Temperaturfühlers 2 bestimmt werden soll. Die Messeinrichtung 1 kann den temperaturabhängigen Messwert R und/oder die Prozessgröße X als analoge Sensorsignale empfangen und digitalisieren oder in Form von digital vorverarbeiteten Signalen erhalten. Ferner kann innerhalb der Messeinrichtung 1 eine Vorverarbeitung, beispielsweise eine Glättung oder Mittelwertbildung des Messwerts R und/oder der Prozessgröße X erfolgen. Als Ausgangswerte stellt die Messeinrichtung 1 einen gemessenen Messwert $R_M(i)$ und eine gemessene Prozessgröße $X_M(i)$ zur Verfügung, die an ein Trainingsmodul 3 ausgegeben werden.

In dem Trainingsmodul 3 werden unter Verwendung des zuvor ausführlich beschriebenen Verfahrens eine Zuordnungstabelle mit Stützstellenpaaren $(X_N(j), R^*_N(j))$ gebildet, in welchen die temperaturabhängigen Messwerte $R_M$

(i) normiert, die normierten temperaturabhängigen Messwerte $R_M(i)$ linearisiert und als linearisierte Messwerte $R^*_M(i)$ der Prozessgröße $X_M(i)$ zugeordnet werden. Aus einem oder mehrerer dieser Messwertpaare $(X_M(i), R^*_M(i))$ wird ein Stützstellenpaar $(X_N(j), R^*_N(j))$ erzeugt. Die Zuordnungstabelle mit den Stützstellenpaaren $(X_N(j), R^*_N(j))$ wird einem Berechnungsmodul 4 zur Verfügung gestellt, das die Zielgröße $X(R)$ mittels einer Inter- oder Extrapolation ermittelt.

Dazu wird dem Berechnungsmodul 4 der jeweils aktuelle temperaturabhängige Messwert $R_M$ zugeführt, zu dem eine inter- bzw. extrapolierte Prozessgröße $X$ ermittelt wird. Diese zu dem aktuellen temperaturabhängigen Messwert $R_M$ ermittelte Prozessgröße $X$ wird als Zielgröße $X(R)$ in einem Ausgabemodul 5 ausgegeben, welches eine geeignete Schnittstelle zur Übergabe der Prozessgröße $X$ an nachfolgende Systeme aufweist.

Bei der Prozessgröße $X$ kann es sich beispielsweise um einen Vorlauftemperaturkorrekturwert handeln, der an einen Wärmeerzeuger einer Heizungsanlage zur wärmebedarfsgeführten Regelung übergeben wird. Die Schnittstelle kann auf vielfältige, geeignete Weisen ausgebildet sein.

An das Trainingsmodul 3 ist ferner ein Visualisierungsmodul 6 angeschlossen, mit dem die Zuordnungstabelle mit den Stützstellenpaaren $(X_N(j), R^*_N(j))$ graphisch bspw. in Kennlinienform nach Anwendung der Inter- und Extrapolationsverfahren darstellbar ist.

Erfindungsgemäß können die Messeinrichtung 1, das Trainingsmodul 3, das Berechnungsmodul 4, das Ausgabemodul 5 und/oder das Visualisierungsmodul 6 in einer geeigneten Computer- und/oder Mikrokomputereinrichtung integriert untergebracht oder an einen herkömmlichen Computer beispielsweise mittels eines Netzwerk- oder Bussystems anschließbar sein, um Parametrierungen an dem System vorzunehmen und aktuelle Stützstellenpaare $(X_N(j), R^*_N(j))$ darzustellen.

Die in Fig. 7 dargestellte Ausführungsform einer erfindungsgemäßen Vorrichtung zur Erzeugung einer Kennlinie funktioniert vergleichbar zu der mit Bezug auf Fig. 6 beschriebenen Vorrichtung, so dass auf die vorstehende Beschreibung Bezug genommen werden kann.

Im Unterschied zu der in Fig. 6 dargestellten Vorrichtung erhält das Berechnungsmodul 4 den aktuellen temperaturabhängigen Messwert $R$ jedoch nicht aus der Messung der Messeinrichtung 1 an dem Temperaturfühler 2, sondern als separat erzeugten, numerischen Wert $R$, der beispielsweise von einem anderen in dem System vorkommenden Gerät erzeugt wurde.

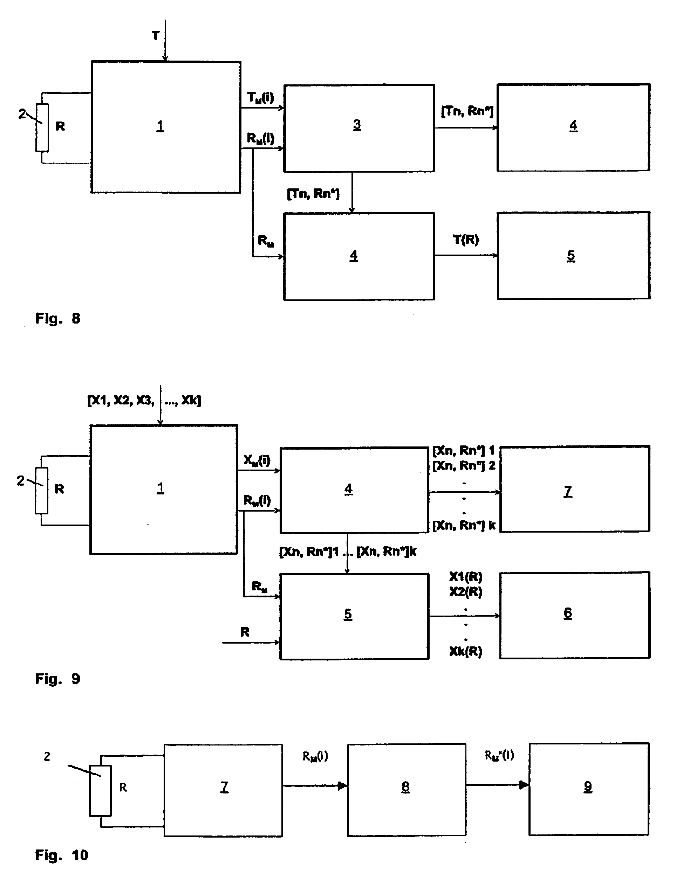

Fig. 8 stellt den Sonderfall einer Vorrichtung dar, in der die Prozessgröße $X$ die Temperatur $T$ ist, so dass mit dem erfindungsgemäßen Verfahren in der in Fig. 8 dargestellten Vorrichtung tatsächlich eine Widerstands-Temperatur-Kennlinie für den Temperaturfühler 2 mit unbekannter Kennlinie erzeugt werden soll. Hierzu wird die Temperatur $T$ durch eine bekannte Referenzmessung oder sonstige Eingaben, beispielsweise im Internet abrufbare Temperaturdaten, erzeugt. Hierdurch ist es möglich, eine Temperaturkennlinie eines Temperaturfühlers 2 mit unbekannter Kennlinie automatisch zu generieren.

Fig. 9 stellt eine Verfahrensvariante dar, in der mehrere verschiedene Kennlinien für verschiedene Prozessgrößen $X$ gleichzeitig erzeugt werden. Die temperaturabhängigen Prozessgrößen $X1$ bis $Xk$ sind dabei Prozessgrößen der Gebäudeversorgungstechnik, beispielsweise der Gebäudeversorgungszustand, der Gebäudewärmebedarf, eine Vorlauftemperaturkorrektur, ein Heizkörper-Betriebsleistungsverhältnis, ein Gebäudelüftungskennwert oder dergleichen. Auf diese Weise können temperaturabhängige Kennlinien von in der Wärmeregelung des Gebäudes verwendeten Größen automatisch erzeugt und nachgeführt werden, so dass ständig aktualisierte Kennlinien zu temperaturabhängigen Messgrößen $R$, die entweder aus der Messung $R_M$ gewonnen wird oder bereits als numerischer Wert $R$ vorliegt, erzeugt werden.

In Fig. 10 ist eine weitere erfindungsgemäße Vorrichtung dargestellt, mit der insbesondere eine Linearisierung der temperaturabhängigen Messwerte $R_M(i)$ durchgeführt werden kann. Diese weist ein Widerstands-Messwerk 7 auf, an welches ein Temperaturfühler 2 angeschlossen ist, der als temperaturabhängigen Messwert einen Widerstandswert $R$ liefert. Dieser wird als gemessener Wert $R_M(i)$ an eine Mikrocomputereinheit 8 weitergegeben, welche zunächst einen Startwert $R(0)$ generiert und anschließend eine logarithmische Normierung der Messwerte $R_M$ wie in Fig. 3 dargestellt vornimmt. Ausgegeben wird der linearisierte und normierte Messwert $R^*_M(i)$, der von einer Aufgabeeinheit oder weiterverarbeitenden Einheit 9 weiterverarbeitet wird.

Wie insbesondere aus den Fig. 6 bis 9 deutlich wird, muss für die numerische Ermittlung der temperaturabhängigen Abbildung $X(R)$ die konkrete Widerstandskennlinie $R(T)$ der verwendeten Temperaturfühler nicht unbedingt bekannt sein. Auch muss der Typ des eingesetzten Temperaturfühlers nicht identifiziert werden. Somit können vorhandene Temperaturfühler 2 mit unterschiedlichen Kennlinienverläufen ohne Identifikation der Fühlertypen durch Anwendung des erfindungsgemäßen Verfahrens bzw. Einbindung der erfindungsgemäßen Vorrichtungen in bestehenden Systemen verwendet werden. Dies spart Kosten für neue Temperaturfühler, Montagekosten und Arbeitszeit.

Stattdessen werden die Messwerte der Zielgröße $X_M$ erfindungsgemäß auf die der Temperatur proportionalen Widerstandsmesswerte $R_M$ in numerischer Form abgebildet und erlauben somit, auf Basis bekannter Inter- oder Extrapolationsverfahren eine einfache Ermittlung der gesuchten Prozessgröße bei einem nahezu beliebigen, beispielsweise nur numerisch bekannten Messwert $R$.

Besonders vorteilhafte Anwendungen des Verfahrens sind die automatisierte Erzeugung von Kennlinien für Temperaturfühler unbekannter Kennlinie, wie in Fig. 8 dargestellt, sowie die automatisierte Erzeugung und Nachführung (Adaption) von Kennlinien von Prozessgrößen der Gebäudeversorgungstechnik, die außentemperaturabhängig sind, wie in Fig. 9 dargestellt. Beispiele für diese Prozessgrößen der Gebäudeversorgungstechnik sind eine Heizungsfahrkurve, d.h. der außentemperaturgeführte Sollwert der Vorlauftemperatur, ein Gebäudeversorgungszustand, ein Gebäudewärmebedarf, eine Vorlauf- oder Massenstromkorrektur, Heizkörper-Betriebsleistungsverhältnisse, Heizkörper-Normleistungsverhältnisse und/oder Gebäude-Lüftungskennzahlen, die das Nutzerlüftungsverhalten abbilden.

So kann eine Verknüpfung von bestehenden temperaturabhängigen Regelsystemen, beispielsweise einer außentemperaturgeführten Vorlauftemperaturregelung, mit Systemen zur Analyse der oben genannten Prozessgrößen der Gebäudeversorgungstechnik oder auch mit Systemen zur Optimierung des Wärmeangebots (wärmebedarfgeführte Optimierungssysteme) kostengünstig über die Schnittstelle Außentemperaturfühler oder Vorlauftemperaturfühler als Temperaturfühler 2 der bestehenden Regelsysteme erfolgen.

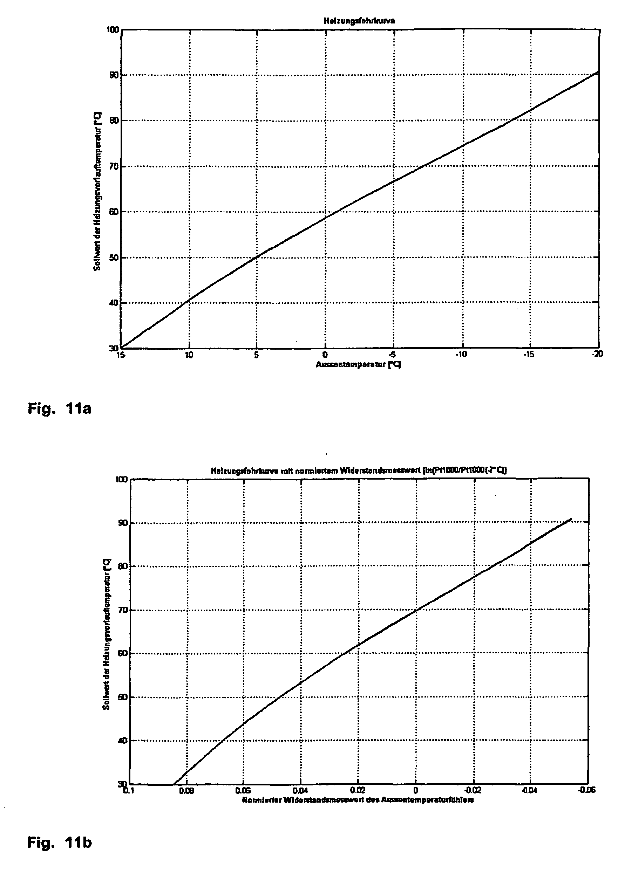

Ein Beispiel für eine wärmebedarfsgeführte Heizungsfahrkurve unter Anwendung der vorliegenden Erfindung ist in den Fig. 11a bis 11d dargestellt. Fig. 11a zeigt eine herkömmliche Heizungsfahrkurve nur in Abhängigkeit von der Außentemperatur, der eine bestimmte Heizungsvorlauftemperatur zugeordnet ist. Fig. 11b stellt dieselbe Heizungsfahrkurve in Abhängigkeit eines normierten Widerstandsmesswerts $R^*_N(i)$ des verwendeten Außentemperaturfühlers 2 dar.

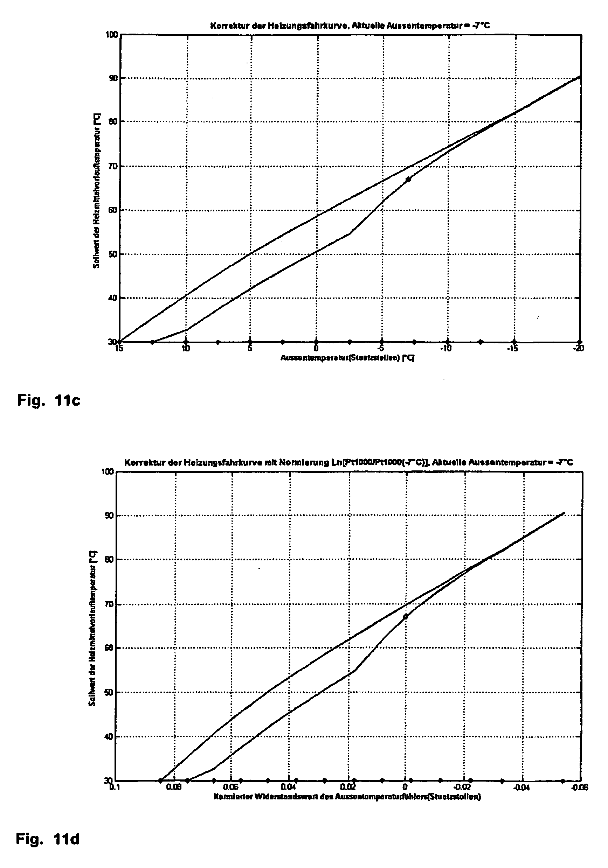

In den Fig. 11c und 11d ist eine wärmebedarfsgeführte Korrektur der Heizungsfahrkurve in Abhängigkeit der Außentemperatur bzw. der normierten Widerstandswerte des Außentemperaturfühlers dargestellt, die auf Grundlage der Stützstellenpaare $(X_N(j), R^*_N(j))$ gemäß der vorliegenden Erfindung erzeugt wurde.

**Bezugszeichenliste**

| | |
|---|---|
| 1 | Messeinrichtung |
| 2 | Temperaturfühler |
| 3 | Trainingsmodul |
| 4 | Berechnungsmodul |
| 5 | Ausgabemodul |
| 6 | Visualisierungseinrichtung |
| 7 | Widerstandsmesswerk |
| 8 | Mikrocomputereinheit |
| 9 | Ausgabeeinheit/weiterverarbeitende Einheit |

| | |
|---|---|
| R | temperaturabhängiger Messwert |
| R (0) | Startwert |
| $R_M(i)$ | Messwert |
| $R^*_M(i)$ | linearisierter und normierter Messwert |
| $R^*_N(j)$ | Stützstellen- Wert |
| X | Prozessgröße |
| $X_M(i)$ | gemessene Prozessgröße |
| $X_N(j)$ | Stützstellen- Prozessgröße |
| J | Anzahl der Stützstellen |
| $K_{skal}$ | Skalierungsfaktor |

**Patentansprüche**

1. Verfahren zur Erzeugung temperaturabhängiger Kennlinien für Prozessgrößen (X) als Funktion eines temperaturabhängigen Messwertes (R), wobei eine Zielgröße (X(R)) ermittelt wird, **dadurch gekennzeichnet, dass**

 - aus Messwertpaaren $(X_M(i), R_M(i))$ der Prozessgröße und des temperaturabhängigen Messwertes eine Zuordnungstabelle mit Stützstellenpaaren $(X_N(j), R^*_N(j))$ gebildet wird, aus welcher mittels Inter- oder Extrapolation die Zielgröße (X(R)) ermittelt wird,
 - Messwertpaare $(X_M(i), R_M(i))$ abgespeichert werden,
 - ein temperaturabhängiger Messwert als Startwert (R(0)) festgelegt wird und alle temperaturabhängigen Messwerte $(R_M(i))$ mit diesem Startwert (R(0)) normiert werden,
 - die normierten, temperaturabhängigen Messwerte $(R_M(i))$ durch eine logarithmische Normierung eines jeweiligen temperaturabhängigen Messwerts $(R_M(i))$ mit einem Startwert (R(0)) linearisiert und als linearisierte Messwerte ($R^*_M(i)$) der gemessenen Prozessgröße ($X_M(i)$) zugeordnet werden und

- aus einem oder mehreren Messwertpaar(en) ($X_M(i)$, $R^*_M(i)$) ein Stützstellenpaar ($X_N(j)$, $R^*_N(j)$) erzeugt wird.

2. Verfahren nach Anspruch 1, **dadurch gekennzeichnet, dass** ein Messwertpaar ($X_M(i)$, $R_M(i)$) zeitlich geglättet abgespeichert wird.

3. Verfahren nach Anspruch 1 oder 2, **dadurch gekennzeichnet, dass** der erste temperaturabhängige Messwert ($R_M(i=0)$) als Startwert ($R(0)$) festgelegt wird.

4. Verfahren nach einem der vorhergehenden Ansprüche, **dadurch gekennzeichnet, dass** der Startwert ($R(0)$) bei der Erfassung nachfolgender Messwertpaare ($X_M(i)$, $R_M(i)$) nachgeführt führt, indem als Startwert ($R(0)$) derjenige Messwert $R_M(i)$ gewählt wird, der aus einer Messwertreihe dem größten oder dem kleinsten Messwert entspricht oder einem ausgezeichneten Messwert am nächsten kommt.

5. Verfahren nach einem der vorhergehenden Ansprüche, **dadurch gekennzeichnet, dass** der linearisierte Messwert ($R^*_M(i)$) auf einen vorgegebenen Zahlenwertebereich skaliert wird.

6. Verfahren nach einem der vorhergehenden Ansprüche, **dadurch gekennzeichnet, dass** jedes linearisierte Messwertpaar ($X_M(i)$, $R^*_M(i)$) ein Stützstellenpaar ($X_N(j)$, $R^*_N(j)$) bildet, bis eine vorgebbare Anzahl ($J$) von Stützstellen erreicht ist.

7. Verfahren nach einem der vorhergehenden Ansprüche, **dadurch gekennzeichnet, dass** Stützstellenpaare ($X_N(j)$, $R^*_N(j)$) aktualisiert werden, indem ein Stützstellenpaar ($X_N(j)$, $R^*_N(j)$), dessen Stützstellenmesswert ($R^*_N(j)$) dem temperaturabhängigen Messwert ($R^*_M(i)$) am nächsten kommt, mit dem linearisierten Messwertpaar ($X_M(i)$, $R^*_M(i)$) verschmolzen wird.

8. Verfahren nach einem der vorhergehenden Ansprüche, **dadurch gekennzeichnet, dass** die Stützstellenpaare ($X_N(j)$, $R^*_N(j)$) während des regulären Betriebs eines die Kennlinie verwendenden Systems regelmäßig weiter erfasst und insbesondere nachgeführt werden.

9. Vorrichtung zur Durchführung eines Verfahrens zur Erzeugung temperaturabhängiger Kennlinien von Prozessgrößen ($X$) **gekennzeichnet durch** eine Messereinrichtung (1, 7) zur Erfassung eines temperaturabhängigen Messwertes ($R_M(i)$) und eines diesem zugeordneten Prozesswertes ($X_M(i)$), ein Trainingsmodul (3, 8) zur Bildung einer Zuordnungstabelle mit Stützstellenpaaren ($X_N(j)$, $R^*_N(j)$) und ein Berechnungsmodul (4, 8) zur Ermittlung einer Zielgröße ($X(R)$) mittels Inter- oder Extrapolation, wobei das Trainingsmodul (3, 8) eine Recheneinheit aufweist, welche zur Durchführung des Verfahrens nach einem der Ansprüche 1 bis 8 eingerichtet ist.

10. Vorrichtung nach Anspruch 9, **dadurch gekennzeichnet, dass** ein Visualisierungsmodul (6) vorgesehen ist, mit dem die Zuordnungstabelle mit Stützstellenpaaren ($X_N(j)$, $R^*_N(j)$) grafisch darstellbar ist.

11. Vorrichtung nach Anspruch 9 oder 10, **dadurch gekennzeichnet, dass** ein Ausgabemodul (5, 9) vorgesehen ist, welches eine Schnittstelle zur Übergabe der Prozessgröße ($X$) an nachfolgende Systeme aufweist.

**Claims**

1. Method for creating temperature characteristic curves for process variables ($X$) as a function of a temperature-dependent measurement value ($R$), wherein a target variable ($X(R)$) is determined, **characterized in that**

- measurement value pairs ($X_m(i)$), $R_M(i)$) of the process variable and the temperature-dependent measurement value are used to form an assignment table with sampling point pairs ($X_N(j)$, $R^*_N(j)$), from which the target variable ($X(R)$) is determined using interpolation or extrapolation,
- measurement value pairs ($X_M(i)$, $R_M(i)$) are stored,
- one temperature-dependent measurement value is defined as the starting value ($R(0)$) and all temperature-dependent measurement values ($R_M(i)$) are normalized with this starting value ($R(0)$),
- the normalized, temperature-dependent measurement values ($R_M(i)$) are linearized by a logarithmic scaling of a respective temperature-dependent measurement value ($R_M(i)$) with a start value ($R(0)$) and are assigned as linearized measurement values ($R^*_M(i)$) to the measured process variable ($X_M(i)$), and

- a sampling point pair ($X_N(j)$, $R^*_N(j)$) is generated from one or more measurement value pair(s) ($X_M(i)$, $R^*_M(i)$).

2. Method according to Claim 1, **characterized in that** a measurement value pair ($X_M(i)$, $R_M(i)$) is stored in a temporally smoothed form.

3. The method according to Claim 1 or 2, **characterized in that** the first temperature-dependent measurement ($R_M(i=0)$) is defined as the starting value ($R(0)$).

4. Method according to any one of the preceding claims, **characterized in that** during the recording of subsequent pairs of measurement values ($X_M(i)$, $R_M(i)$) the starting value ($R(0)$) is tracked by selecting as the starting value ($R(0)$) that measurement value $R_M(i)$ which corresponds to the largest or the smallest measurement value from a series of measurement values, or is next in sequence to a marked measured value.

5. Method according to any one of the preceding claims, **characterized in that** the linearized measurement value ($R^*_M(i)$) is scaled to a predetermined range of numerical values.

6. Method according to any one of the preceding claims, **characterized in that** each linearized measurement value pair ($X_M(i)$, $R^*_M(i)$) forms a sampling point pair ($X_N(j)$, $R^*_N(j)$) until a pre-specifiable number ($J$) of sampling points is reached.

7. Method according to any one of the preceding claims, **characterized in that** sampling point pairs ($X_N(j)$, $R^*_N(j)$ are updated by a sampling point pair ($X_N(j)$, $R^*_N(j)$) whose sampling point measurement value ($R^*_N(j)$) is next in sequence to the temperature-dependent measurement ($R^*_M(i)$) being merged with the linearized measurement value pair ($X_M(i)$, $R^*_M(i)$).

8. Method according to any one of the preceding claims, **characterized in that** the sampling point pairs ($X_N(j)$, $R^*_N(j)$) continue to be regularly recorded, and in particular tracked, during the normal operation of a system using the characteristic curve.

9. Device for carrying out the method for generating temperature-dependent characteristic curves of process variables ($X$), **characterized by** a measurement device (1, 7) for recording a temperature-dependent measurement value ($R_M(i)$) and a process value ($X_M(i)$) assigned thereto, a training module (3, 8) for forming an assignment table with sampling point pairs ($X_N(J)$, $R^*_N(j)$) and a calculation module (4, 8) for calculating a target variable ($X(R)$) using interpolation or extrapolation, wherein the training module (3, 8) has a calculation unit configured for carrying out the method according to any one of Claims 1 to 8.

10. The device according to claim 9, **characterized in that** a display module (6) is provided, with which the assignment table with sampling point pairs ($X_N(j)$, $R^*_N(j)$) can be graphically displayed.

11. The device according to Claim 9 or 10, **characterized in that** an input/output module (5, 9) is provided, which has an interface for transferring the process variable ($X$) to subsequent systems.

**Revendications**

1. Procédé destiné à la production de caractéristiques de température pour des valeurs de processus ($X$) en tant que fonction d'une valeur de mesure ($R$) de température, pour lequel une valeur cible ($X(R)$) est définie, **caractérisé en ce**

- **qu'**à partir de paires de valeurs de mesure ($X_M(i)$, $R_M(i)$) de la valeur de processus et de la valeur de mesure de température un tableau de références avec des paires de noeuds d'interpolation ($X_N(j)$, $R^*_N(j)$) est constitué à partir duquel on définit la valeur cible ($X(R)$) au moyen d'interpolation ou d'extrapolation,
- **que** des paires de valeurs de mesure ($X_M(i)$, $R_M(i)$) sont mémorisées,
- **qu'**une valeur de mesure de température est établie en tant que valeur initiale ($R(0)$) et toutes les valeurs de mesure ($R_M(i)$) de température sont normalisées avec cette valeur initiale ($R(0)$),
- les valeurs de mesure ($R_M(i)$) de température normalisées sont linéarisées par une normalisation logarithmique d'une valeur de mesure ($R_M(i)$) de température respective avec une valeur initiale ($R(0)$) et sont affectées en tant que valeurs de mesure $R^*_M(i)$) linéarisées de la valeur de processus ($X_M(i)$) mesurée et
- **qu'**à partir d'une paire ou plusieurs paires de valeurs de mesure ($X_M(i)$, $R^*_M(i)$), on produit une paire de noeuds d'interpolation ($X_N(j)$, $R^*_N(j)$).

2. Procédé selon la revendication 1, **caractérisé en ce qu'**une paire de valeurs de mesure ($X_M(i)$, $R_M(i)$) est mémorisée lissée en fonction du temps.

3. Procédé selon la revendication 1 ou 2, **caractérisé en ce que** la première valeur de mesure ($R_M(i=0)$) est définie comme valeur initiale ($R(0)$).

4. Procédé selon une quelconque des revendications précédentes, **caractérisé en ce que** la valeur initiale ($R(0)$) est restituée lors de la saisie des paires de valeurs de mesure ($X_M(i)$, $R_M(i)$) suivantes, en choisissant comme valeur initiale ($R(0)$) la valeur de mesure $R_M(i)$ qui, dans une série de valeurs de mesure correspond, à la valeur de mesure le plus grande ou la plus petite ou vient immédiatement après une valeur de mesure remarquable.

5. Procédé selon une quelconque des revendications précédentes, **caractérisé en ce que** la valeur de mesure ($R^*_M(i)$) linéarisée est échelonnée sur une plage de valeurs numériques spécifiées.

6. Procédé selon une quelconque des revendications précédentes, **caractérisé en ce que** chaque paire de valeurs de mesure ($X_M(i)$, $R^*_M(i)$) constitue une paire de noeuds d'interpolation ($X_N(j)$, $R^*_N(j)$) jusqu'à l'obtention d'un nombre ($J$) spécifiable de noeuds d'interpolation.

7. Procédé selon une quelconque des revendications précédentes, **caractérisé en ce que** les paires de noeuds d'interpolation ($X_N(j)$, $R^*_N(j)$) sont actualisées, une paire de noeuds d'interpolation ($X_N(j)$, $R^*_N(j)$) dont la valeur de mesure de noeud d'interpolation ($R^*_N(j)$) venant à la suite de la valeur de mesure ($R^*_M(i)$) de température, est fusionnée avec la paire de valeurs de mesure ($X_M(i)$, $R^*_M(i)$).

8. Procédé selon une quelconque des revendications précédentes, **caractérisé en ce que** les paires de noeuds d'interpolation ($X_N(j)$, $R^*_N(j)$) continuent d'être régulièrement saisies et en particulier restituées pendant l'exploitation régulière d'un système utilisant la caractéristique.

9. Dispositif pour l'exécution d'un procédé destiné à la production des caractéristiques de température de valeurs de processus ($X$), **caractérisé par** un système de mesure (1, 7) destiné à la saisie d'une valeur de mesure ($R_M(i)$) de température et d'une valeur de processus ($X_M(i)$) affectée à celle-ci, un module de formation (3, 8) pour constituer un tableau de références avec des paires de noeuds d'interpolation ($X_N(j)$, $R^*_N(j)$) et un module de calcul (4, 8) pour définir une valeur cible ($X(R)$) au moyen d'interpolation ou d'extrapolation, le module de formation (3, 8) présentant une unité de calcul qui est mise en oeuvre pour exécuter le procédé selon une quelconque des revendications 1 à 8.

10. Dispositif selon la revendication 9, **caractérisé en ce qu'**un module de visualisation (6) est prévu avec lequel le tableau de références peut être représenté graphiquement avec des paires de noeuds d'interpolation ($X_N(j)$, $R^*_N(j)$).

11. Dispositif selon la revendication 9 ou 10, **caractérisé en ce qu'**un module de sortie (5, 9) est prévu qui présente une interface destinée à transférer la valeur de processus ($X$) aux systèmes suivants.

Fig. 1

Fig. 2

**Fig. 3**

**Fig. 4**  Temperatur T

**Fig. 5**  Temperatur T

Fig. 6

Fig. 7

Fig. 8

Fig. 9

Fig. 10

**Fig. 11a**

**Fig. 11b**

**Fig. 11c**

**Fig. 11d**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0246851 A1
- DE 4410705 A1
- DE 3742335 A1